Europäisches Patentamt

European Patent Office

Office européen des brevets

(11) Publication number: **0 266 759**
**A2**

## (12) EUROPEAN PATENT APPLICATION

(21) Application number: **87116252.5**

(22) Date of filing: **04.11.87**

(51) Int. Cl.4: **C08B 31/12**

(30) Priority: **04.11.86 PL 262210**

(43) Date of publication of application:
**11.05.88 Bulletin 88/19**

(84) Designated Contracting States:
**AT FR GB IT NL**

(71) Applicant: **POLITECHNIKA WARSZAWSKA**
**Plac Jednosci Robotniczej 1**
**00-661 Warszawa(PL)**

(72) Inventor: **Brzozowski, Zbigniew**
**ul. Bruna 28/37**
**PL-02-594 Warszawa(PL)**
Inventor: **Kaczorowski, Janusz**
**ul. Krasinskiego 38 m.69**
**PL-01-779 Warszawa(PL)**
Inventor: **Sobczak, Wlodziemierz**
**ul. Promenada 9/11 m.2**
**PL-00-778 Warszawa(PL)**
Inventor: **Pietrzak, Bogdan**
**ul. Grzybowska 39 m.109**
**PL-00-855 Warszawa(PL)**
Inventor: **Nowak, Maciej**
**ul. Mieroslawskiego 2/1**
**PL-81-737 Sopot(PL)**
Inventor: **Horbaczewski, Andrzej**
**ul. Hibnera 37/4**
**PL-80-227 Gdansk(PL)**
Inventor: **Pietraszewski, Jerzy**
**ul. Grodzka 14**
**PL-87-800 Wloclawek(PL)**
Inventor: **Strzesniewski, Marian**
**ul. Wesola 12/67**
**PL-87-800 Wloclawek(PL)**

(74) Representative: **Schrimpf, Robert et al**
**Cabinet Regimbeau 26, Avenue Kléber**
**F-75116 Paris(FR)**

(54) Method of manufacturing 2,3-dihydroxypropyl ether of starch.

(57) The invention is related to the method of obtaining 2,3-dihydroxypropyl ether of starch with general formula 1 where $R_1$, $R_2$ and $R_3$ can be the same or different being a hydrogen atom and/or being CH2CH/OH/CH2/OH/ groups where the degree of substitution is at least 0.1.

The method according to the invention consists in reaction of starch with 3-chloro-1,2-propandiol in the amount of 1 - 150 % by weight in temperature 20 - 120°C.

The reaction is carried out in alkaline aqueous solution characterized at least by equimolar amount of alkaline compounds in relation to applied 3-chloro-1,2-propandiol.

$$\left[\begin{array}{c} CH_2OR_3 \\ O \\ OR_2 \\ OR_1 \end{array}\right]_n$$

la.

# METHOD OF MANUFACTURING 2,3-DIHYDROXYPROPYL ETHER OF STARCH

The invention is related to the method for manufacturing 2,3-dihydroxypropyl ether of starch with general formula 1 where $R_1$, $R_2$ and $R_3$ can be the same or different being a hydrogen atom and/or being $CH_2CH/OH/CH_2/OH/$ group where the degree of substitution is at least 0.1.

This compound can be applied as a tixotropic agent in vinyl and cellulosic paints, as a protecting gel in mining wells or as an additive to sizing in fiber industry. The already known method of starch modification consists in a reaction of starch with 1,2-epoxy-3-chloro-propane, and as a result, the obtained polymers are mixture of dihydroxypropyl and chloro-hydroxypropyl ethers of starch. However, the presence of considerable amounts of 3-chloro-2-hydroxypropyl ether of starch in the reaction product causes decreased solubility of the obtained product, which considerably limits the range of its application in industrial practice.

Also dihydroxypropyl derivative of starch can be obtained by the reaction of starch with 1,2-epoxy-3-hydroxypropane in aqueous and/or alcoholic solution of alkaline metal hydroxide. The main disadvantage of this method is partial crosslinking of just obtained polymers, which makes difficult carrying out the technological process especially when the aim is to obtain the product having a higher degree of hydroxy groups substitution in glucosic rings of starch. Partial polymer cross-linking in the process also causes considerable narrowing of its industrial utilization range.

In addition, the known methods of producing dihydroxypropyl derivatives of starch do not guarantee obtaining polymers with homogeneous chemical content which makes impossible to apply them as thickeners of paints.

The method of producing 2,3-dihydroxypropyl ether of starch according to the invention does not have to above mentioned disadvantages.

According to the invention, the method consists in the reaction of starch with 3-chloro-1,2-propandiol. The reaction is carried out in aqueous alkaline solution while applying 1 - 150 weight % of 3-chloro-1,2-propandiol related to starch mass.

Disodium carbonate or trisodium ortophosfate or disodium tetraborate are advantageously used as alkaline compounds in at least equimolar amounts in relation to applied 3-chloro-1,2-propandiol. Reaction temperature is 20 - 120°C.

The product of reaction carried out according to the invention is the polymer with homogeneous chemical content, and satisfactory solubility in water and uncrosslinkable during the stage of obtaining.

The method according to the invention is explained in more detail, in examples of its realization which do not limit its range of application.

## Example 1

20 g of starch, 50 g of water are placed in a threeway flask with volume 250 cm³, provided with a stirrer, a reflux condenser with a dropping funnel and a thermometer. The whole is heated to a temperature of 100°C with rapid stirring until homogeneous solution has been obtained.

While continuing stirring, 60 g of 50% disodium tetraborate solution is dropped in small portions. Next, still stirring, 22 g of 3-chloro-1,2-propandiol is dropped in small portions so that the temperature of reaction mixture should not exceed 120°C. After the whole portion of 3-chloro-1,2-propandiol has been added, the reaction mixture is still heated in temperature 110 - 120°C for two hours until the neutral reaction has been obtained. Product of theoretical degree of substitution 1.6 of hydroxyl groups in glucosic rings of starch is obtained. Its density is 1.12 g/cm³ with 13870 mPas viscosity. The obtained product being added to emulsion paints shows proper tixotropic activity.

## Example 2

20 g of starch and 6 g disodium carbonate solution in 74 g of water are placed in a threeway flask with volume 250 cm³ provided with a stirrer, a reflux condenser with a dropping funnel and a thermometer. Thw whole is heated to a temperature of 100°C with rapid stirring until homogeneous solution has been obtained.

While continuing stirring, 14 g 3-chloro-1,2-propandiol is dropped in small portions so that the temperature of reaction mixture should not exceed 120°C.

After the whole portion of 3-chloro-1,2-propandiol has been added, the reaction mixture is still heated in temperature 110 - 120°C for two hours until the neutral reaction has been obtained. Product of theoretical degree of substitution 1.0 of hydroxyl groups in glucosic rings of starch is obtained. Its density is 1.10 g/cm³ with 1200 mPas viscosity. The obtained product shows proper activity as additive to fiber sizing.

Example 3

20 g of starch, 20 g trisodium ortophosfate and 60 g of water are placed in a threeway flask with volume 250 cm$^3$ provided with a stirrer, a reflux condenser with a dropping funnel and a thermometer. The whole is heated to a temperature of 100°C with rapid stirring until homogeneous solution has been obtained. While continuing stirring 42 g 3-chloro-1,2-propandiol is dropped in small portions so that the temperature of reaction mixture should not exceed 120°C.

After the whole portion of 3-chloro-1,2-propandiol has been added, the reaction mixture is still heated in temperature 110 - 120°C for 2 hours until the neutral reaction has been obtained.

Product of theoretical degree of substitution 3.0 of hydroxyl groups in glucosic rings of starch is obtained. Its density is 1.26g/cm$^3$ with 34000 mPas viscosity.

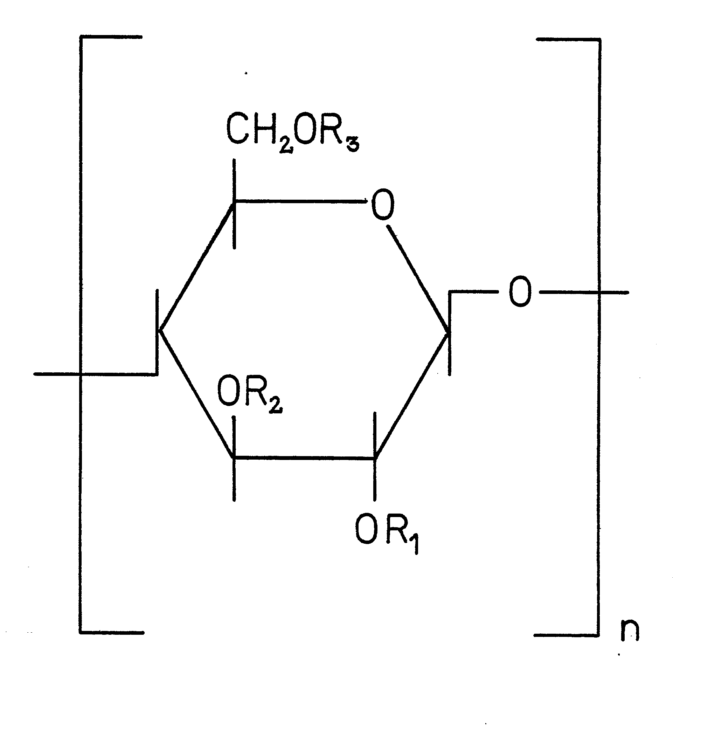

**Claims**

1. The method of obtaining 2,3-dihydroxypropyl ether of starch with general formula 1 where R$_1$, R$_2$ and R$_3$ can be the same or different being a hydrogen atom and/or being CH$_2$CH/OH/CH$_2$/OH/ group where the degree of substitution is at least 0.1 and characterized in that reaction of starch with 3-chloro-1,2-propandiol while applying 1 - 150 % by weight of 3-chloro-1,2-propandiol related to starch mass in temperature 20 - 120°C is carried out in aqueous alkaline solution in at least equimolar amount of alkaline compounds in relation to applied 3-chloro-1,2-propandiol.

2. The method of Claim 1 characterized in that disodium carbonate or trisodium orthophosfate or disodium tetraborate are advantageously used as alkaline compounds